# EUROPÄISCHE PATENTSCHRIFT

(11) **EP 2 639 504 B1**
(45) Veröffentlichungstag und Bekanntmachung des Hinweises auf die Patenterteilung: **10.03.2021**
(21) Anmeldenummer: 13153144.4
(22) Anmeldetag: 29.01.2013
(51) Int. Cl.: F22B 1/00, F03G 6/06, F01K 23/10, F02C 6/18, F22B 1/18, F24S 10/30

(54) **Thermische Solaranlage und Verfahren zum Betreiben einer thermischen Solaranlage**
Thermal solar assembly and method for operating a thermal solar assembly
Installation solaire thermique et procédé de fonctionnement d'une installation solaire thermique

(30) Priorität: 12.03.2012 DE 102012203805
(43) Veröffentlichungstag der Anmeldung: 18.09.2013
(73) Patentinhaber: MAN Energy Solutions SE, 86153 Augsburg (DE)
(72) Erfinder: Witt, Michael, 22926 Ahrensburg (DE); Bösch, Heinz-Hugo, 21244 Buchholz (DE)

(56) Entgegenhaltungen:
- WO-A2-2011/068880
- ES-A1- 2 279 658
- JP-A- H06 185 375
- US-A1- 2011 185 742

## Beschreibung

Die Erfindung betrifft eine thermische Solaranlage und ein Verfahren zum Betreiben einer thermischen Solaranlage.

Aus DE 10 2010 061 262 A1 ist bekannt eine thermische Solaranlage mit: einer Solarkollektorenanordnung mit einer Mehrzahl von Solarkollektoren, wobei die Solarkollektorenanordnung eine Solarkollektoren-Fluidpassage definiert zum Hindurchleiten eines Fluids, so dass dem Fluid von auf die Solarkollektoren auftreffender Sonneneinstrahlung eine erste Wärmemenge zuführbar ist, und wobei die Solarkollektoren-Fluidpassage einen ersten Fluideinspeiseanschluss zum in die Solarkollektoren-Fluidpassage Einspeisen von zu erwärmendem Fluid und einen ersten Fluidabgabeanschluss zum aus der Solarkollektoren-Fluidpassage Abgeben von erwärmtem Fluid aufweist; einer Gasturbine mit einem Abgasausgang; einem Abgaswärmetauscher mit einer Abgaspassage, die an den Abgasausgang der Gasturbine angeschlossen ist zum durch die Abgaspassage Hindurchleiten von heißem Abgas der Gasturbine, und einer Wärmetauscher-Fluidpassage zum Hindurchleiten eines Fluids, so dass dem Fluid von dem durch die Abgaspassage hindurchströmenden Abgas eine zweite Wärmemenge zuführbar ist, wobei die Wärmetauscher-Fluidpassage einen zweiten Fluideinspeiseanschluss zum in die Wärmetauscher-Fluidpassage Einspeisen von zu erwärmendem Fluid und einen zweiten Fluidabgabeanschluss zum aus der Wärmetauscher-Fluidpassage Abgeben von erwärmtem Fluid aufweist; wobei der erste Fluidabgabeanschluss direkt mit dem zweiten Fluideinspeiseanschluss fluidverbunden ist, so dass die Solarkollektoren-Fluidpassage und die Wärmetauscher-Fluidpassage miteinander in Reihe fluidverbunden sind; einer Heißfluidaufnahmeeinrichtung, die mit dem zweiten Fluidabgabeanschluss fluidverbunden ist; einer Verbrauchereinrichtung mit einem Fluideingang, der mit der Heißfluidaufnahmeeinrichtung verbunden ist, so dass zumindest ein Teil der ersten und zweiten Wärmemengen über ein Fluid der Verbrauchereinrichtung zuführbar ist; und einer Steuereinrichtung, die mit der Gasturbine verbunden ist und die eingerichtet ist, einen Betrieb der Gasturbine in Abhängigkeit von einer Größe der ersten Wärmemenge zu steuern.

Aus DE 10 2010 061 262 A1 ist außerdem bekannt ein Verfahren zum Betreiben einer thermischen Solaranlage, aufweisend: mittels einer Solarkollektorenanordnung Zuführen einer ersten Wärmemenge zu einem durch eine Solarkollektoren-Fluidpassage der Solarkollektorenanordnung hindurchströmenden Fluid; Betreiben einer Gasturbine in Abhängigkeit von einer Größe der ersten Wärmemenge und mittels eines an einen Abgasausgang der Gasturbine angeschlossenen Abgaswärmetauschers Zuführen einer zweiten Wärmemenge zu einem durch eine Wärmetauscher-Fluidpassage des Abgaswärmetauschers hindurchströmenden Fluid; Übertragen zumindest eines Teils der ersten Wärmemenge auf das durch die Wärmetauscher-Fluidpassage des Abgaswärmetauschers hindurchströmende Fluid und Übertragen zumindest eines Teils einer Summe aus erster und zweiter Wärmemenge auf die Heißfluidaufnahmeeinrichtung; und mittels eines Fluids Zuführen von zumindest einem Teil der Summe aus erster und zweiter Wärmemenge zu einer Verbrauchereinrichtung.

Die WO 2011/068880 A2 lehrt eine Vorrichtung, die von Solarzellen erzeugten Dampf oder heißes Wasser nutzt. Dabei wird entspannter Dampf, der aus einem Hochdruck-Solar-Dampfturbinen-Abschnitt austritt, in einem Nacherhitzer-Wärmetauscher mittels Wärmetransfer von Dampf, der ebenfalls von dem Solar-Dampferzeuger bereitgestellt wird, nacherhitzt.

Die US 2011/185742 A1 offenbart ein Solar-Hybrid-Kreislauf kombiniertes Gas-und Dampfkraftwerk. Dabei weist das Kraftwerk einen Solar-Wärmetransfermedium-Kreislauf, der einen Solar-Erhitzer aufweist, und einen Abwärme-Erhitzer-Kreislauf zur Nutzung der Abwärme einer Gasturbine für das Vorheizen von Speisewasser einer Dampfturbine auf.

Die ES 2 279 658 A1 offenbart ein Kraftwerk zur Stromerzeugung das mittels Solarenergie und Biomasse Luft erhitzt, die wiederum dem Erhitzer eines Dampfkreislaufs einer Dampfturbine zugeführt wird.

In der JP H06 185 375 A ist die Reduzierung der in einem Luftheizofen verbrauchten Abgasmenge beschrieben, damit das Abgas eines Hochofens in einer mit einer Gasturbine ausgestatteten Eisenherstellungsanlage für andere Zwecke effektiv genutzt und Wärme des Abgases aus der Gasturbine zurückgewonnen werden kann.

Der Erfindung liegt die Aufgabe zugrunde, eine thermische Solaranlage und ein Verfahren zum Betreiben einer thermischen Solaranlage bereitzustellen, womit eine höhere Energienutzungseffizienz erzielbar ist.

Dies wird mit einer thermischen Solaranlage gemäß Anspruch 1 und einem Verfahren gemäß Anspruch 7 erreicht. Weiterbildungen der Erfindung sind in den jeweiligen abhängigen Ansprüchen definiert.

Gemäß einem ersten Aspekt der Erfindung weist eine thermische Solaranlage alle Merkmale des anhängenden unabhängigen Anspruchs 1 auf, unter anderem:
eine Solarkollektorenanordnung mit einer Mehrzahl von Solarkollektoren, wobei die Solarkollektorenanordnung eine Solarkollektoren-Fluidpassage definiert zum Hindurchleiten eines Fluids, so dass dem Fluid von auf die Solarkollektoren auftreffender Sonneneinstrahlung eine erste Wärmemenge zuführbar ist, und
wobei die Solarkollektoren-Fluidpassage einen ersten Fluideinspeiseanschluss zum in die Solarkollektoren-Fluidpassage Einspeisen von zu erwärmendem Fluid und einen ersten Fluidabgabeanschluss zum aus der Solarkollektoren-Fluidpassage Abgeben von erwärmtem Fluid aufweist; eine Gasturbine mit einem Abgasausgang; einen Abgaswärmetauscher mit einer Abgaspassage, die an den Abgasausgang der Gasturbine angeschlossen ist zum durch die Abgaspassage Hindurchleiten von heißem Abgas der Gasturbine, und einer Wärmetauscher-Fluidpassage zum Hindurchleiten eines Fluids, so dass dem Fluid von dem durch die Abgaspassage hindurchströmenden Abgas eine zweite Wärmemenge zuführbar ist, wobei die Wärmetauscher-Fluidpassage einen zweiten Fluideinspeiseanschluss zum in die Wärmetauscher-Fluidpassage Einspeisen von zu erwärmendem Fluid und einen zweiten Fluidabgabeanschluss zum aus der Wärmetauscher-Fluidpassage Abgeben von erwärmtem Fluid aufweist; eine Heißfluidaufnahmeeinrichtung, die mit dem ersten Fluidabgabeanschluss fluidverbunden ist und die den zweiten Fluidabgabeanschluss unter Umgehung der Solarkollektoren-Fluidpassage mit dem ersten Fluidabgabeanschluss fluidverbindet; eine Verbrauchereinrichtung mit einem Fluideingang, der mit der Heißfluidaufnahmeeinrichtung verbunden ist, so dass zumindest ein Teil der ersten und zweiten Wärmemengen über ein Fluid der Verbrauchereinrichtung zuführbar ist; und eine Steuereinrichtung, die mit der Gasturbine verbunden ist und die eingerichtet ist, einen Betrieb der Gasturbine in Abhängigkeit von einer Größe der ersten Wärmemenge zu steuern.

Die Steuereinrichtung ist als elektrische bzw. elektronische Steuereinrichtung ausgebildet und enthält Steueralgorithmen in Form von Software, Firmware und/oder Hardware.

Dadurch, dass die mit dem Fluideingang der Verbrauchereinrichtung verbundene Heißfluidaufnahmeeinrichtung direkt mit dem ersten Fluidabgabeanschluss fluidverbunden ist und den zweiten Fluidabgabeanschluss unter Umgehung der Solarkollektoren-Fluidpassage direkt mit dem ersten Fluidabgabeanschluss fluidverbindet, sind die Solarkollektoren-Fluidpassage und die Wärmetauscher-Fluidpassage zueinander parallel geschaltet. Damit muss, wenn genügend Sonnenenergie zur Verfügung steht, so dass ein Betrieb der Gasturbine unterbleiben kann, das in der Solarkollektoren-Fluidpassage erwärmte Fluid nicht durch die Wärmetauscher-Fluidpassage hindurchgeleitet werden, wodurch Wärmeverluste vermieden und damit die Energienutzungseffizienz der Sonnenenergie erhöht ist.

Gemäß der erfindungsgemäßen thermischen Solaranlage ist die Steuereinrichtung eingerichtet, die Gasturbine nur dann in Betrieb zu nehmen, wenn die erste Wärmemenge einen vorbestimmten Grenzwert unterschreitet.

Der Grenzwert kann gemäß der Erfindung unterschritten werden, wenn die von der Solarkollektorenanordnung in Wärmeenergie umwandelbare Sonnenenergie bei Sonnenuntergang oder an Tagen mit Bewölkung reduziert ist. Auf diese Weise wird der Betrieb der Gasturbine auf die Zeiten begrenzt, in denen keine oder nicht genügend Sonnenenergie zum Erreichen des Grenzwertes zur Verfügung steht, womit die Energienutzungseffizienz bzw. Wirtschaftlichkeit der thermischen Solaranlage weiter erhöht werden.

Gemäß der erfindungsgemäßen thermischen Solaranlage ist das durch die Solarkollektoren-Fluidpassage und durch die Wärmetauscher-Fluidpassage hindurchzuleitende Fluid von Wasser gebildet, wobei das der Verbrauchereinrichtung über deren Fluideingang zuzuführende Fluid von Wasserdampf gebildet ist.

Durch die Vermeidung von kostenintensiven speziellen Fluiden, wie z.B. Öl, und die Verwendung von Wasser und Wasserdampf als Fluid können Kosten eingespart werden.

Gemäß einer weiteren Ausführungsform der erfindungsgemäßen thermischen Solaranlage ist die Steuereinrichtung eingerichtet, wenn die erste Wärmemenge den vorbestimmten Grenzwert unterschreitet, einen Teil der zweiten Wärmemenge dem durch die Solarkollektoren-Fluidpassage hindurchströmenden Fluid zuzuführen, so dass dieses auf einer vorbestimmten Temperatur gehalten wird.

Mit dieser Ausgestaltung der erfindungsgemäßen thermischen Solaranlage ist es vorteilhaft möglich, das Fluid in der Solarkollektoren-Fluidpassage der Solarkollektorenanordnung auf einer Vorwärmtemperatur zu halten, so dass bei einem Wiederanfahren der Wärmeproduktion über die Solarkollektorenanordnung schneller die erste Wärmemenge auf bzw. über den Grenzwert ansteigt und dadurch in der Gasturbine genutztes Brenngas eingespart werden kann.

Gemäß noch einer weiteren Ausführungsform der erfindungsgemäßen thermischen Solaranlage sind der erste und der zweite Fluideinspeiseanschluss miteinander fluidverbunden, wobei der Abgaswärmetauscher von einem Abhitzekessel gebildet ist, der eingerichtet ist, durch die Wärmetauscher-Fluidpassage hindurchströmendes Fluid zu am zweiten Fluidabgabeanschluss entnehmbarem Wasserdampf zu verdampfen, und wobei die Solarkollektorenanordnung eingerichtet ist, durch die Solarkollektoren-Fluidpassage hindurchströmendes Fluid via solarer Direktverdampfung zu am ersten Fluidabgabeanschluss entnehmbarem Wasserdampf zu verdampfen.

Durch die solare Direktverdampfung wird eine weitere Verbesserung der Wirtschaftlichkeit gegenüber z.B. mit einem Wärmeträgeröl als Fluid in der Solarkollektorenanordnung betriebenen solarthermischen Anlagen erzielt. Da auf Öl-spezifische Komponenten verzichtet werden kann, sinken die Kosten und kann gleichzeitig die Prozesstemperatur und damit der Wirkungsgrad gegenüber der Öl-Technologie erhöht werden.

Gemäß einer weiteren Ausführungsform der erfindungsgemäßen thermischen Solaranlage weist die Verbrauchereinrichtung eine Dampfturbine und einen von der Dampfturbine drehantreibbaren Elektrogenerator auf.

Gemäß noch einer Ausführungsform der erfindungsgemäßen thermischen Solaranlage sind die Gasturbine, die Dampfturbine und der Elektrogenerator in Form einer Einwellenanlage bzw. in einer Flucht auf einer gemeinsamen Achse angeordnet, wobei die Gasturbine und z.B. für Wartungszwecke bevorzugt auch die Dampfturbine jeweils über eine von der Steuereinrichtung ansteuerbare Kupplung selektiv in und außer Drehantriebsverbindung mit dem Elektrogenerator bringbar sind.

Dadurch kann der dann einzige Elektrogenerator sowohl von der Dampfturbine als auch von der Gasturbine zur Stromerzeugung drehangetrieben werden, so dass Kosten für einen weiteren Elektrogenerator eingespart werden können. Bei Abschaltung der Gasturbine kann diese vom Elektrogenerator abgekuppelt werden, so dass Energieverluste vermieden werden. Bei Wartung der Dampfturbine kann diese ebenfalls vom Elektrogenerator abgekuppelt werden, so dass Energieverluste vermieden werden. Durch die Ausgestaltung als Einwellenanlage wird die Anordnung von Gasturbine, Dampfturbine und Elektrogenerator sowie ggf. einem Getriebe außerordentlich kompakt und kosteneffizient.

Gemäß noch einer weiteren Ausführungsform der erfindungsgemäßen thermischen Solaranlage weist die Heißfluidaufnahmeeinrichtung eine Mehrzahl von Dampfleitungen wie Leitungsrohren auf. Bevorzugt kann die Heißfluidaufnahmeeinrichtung außerdem eine Mehrzahl von von der Steuereinrichtung ansteuerbaren Stellventilen aufweisen. Bevorzugt können Dampfleitungen der Heißfluidaufnahmeeinrichtung mit dem ersten und mit dem zweiten Fluidabgabeanschluss fluidverbunden sein.

Gemäß noch einer Ausführungsform der erfindungsgemäßen thermischen Solaranlage weist diese außerdem eine Speisefluidaufnahmeeinrichtung auf. Die Speisefluidaufnahmeeinrichtung weist bevorzugt eine Mehrzahl von Wasserleitungen wie Leitungsrohren auf. Bevorzugt kann die Speisefluidaufnahmeeinrichtung außerdem eine Mehrzahl von von der Steuereinrichtung ansteuerbaren Stellventilen und Pumpen aufweisen. Bevorzugt sind Wasserleitungen der Speisefluidaufnahmeeinrichtung mit einem Fluidausgang der Verbrauchereinrichtung sowie mit dem ersten und dem zweiten Fluideinspeiseanschluss fluidverbunden. Außerdem können bevorzugt Wasserleitungen der Speisefluidaufnahmeeinrichtung mit dem zweiten Fluidabgabeanschluss fluidverbunden sein.

Gemäß einem zweiten Aspekt der Erfindung weist ein Verfahren zum Betreiben einer thermischen Solaranlage alle Merkmale des anhängenden unabhängigen Anspruchs 7 auf, insbesondere: mittels einer Solarkollektorenanordnung Zuführen einer ersten Wärmemenge zu einem durch eine Solarkollektoren-Fluidpassage der Solarkollektorenanordnung hindurchströmenden Fluid und Übertragen zumindest eines Teils der ersten Wärmemenge auf eine Heißfluidaufnahmeeinrichtung; Vergleichen der ersten Wärmemenge mit einem Grenzwert; wenn die erste Wärmemenge kleiner als der Grenzwert ist, in Betrieb nehmen einer Gasturbine und mittels eines an einen Abgasausgang der Gasturbine angeschlossenen Abgaswärmetauschers Zuführen einer zweiten Wärmemenge zu einem durch eine Wärmetauscher-Fluidpassage des Abgaswärmetauschers hindurchströmenden Fluid und unter Umgehung der Solarkollektoren-Fluidpassage Übertragen zumindest eines Teils der zweiten Wärmemenge auf die Heißfluidaufnahmeeinrichtung; und mittels eines Fluids Zuführen von zumindest einem Teil der ersten und zweiten Wärmemengen zu einer Verbrauchereinrichtung.

Dadurch, dass zumindest ein Teil der ersten Wärmemenge bevorzugt direkt auf die Heißfluidaufnahmeeinrichtung übertragen wird und zumindest ein Teil der zweiten Wärmemenge bevorzugt direkt unter Umgehung der Solarkollektoren-Fluidpassage auf die Heißfluidaufnahmeeinrichtung übertragen wird, können die erste und die zweite Wärme zueinander parallel auf die Heißfluidaufnahmeeinrichtung übertragen werden. Damit wird, wenn genügend Sonnenenergie zur Verfügung steht, so dass ein Betrieb der Gasturbine unterbleiben kann, das in der Solarkollektoren-Fluidpassage erwärmte Fluid nicht durch die Wärmetauscher-Fluidpassage hindurchgeleitet, wodurch Wärmeverluste vermieden und damit die Energienutzungseffizienz der Sonnenenergie erhöht ist.

Der Grenzwert kann gemäß der Erfindung unterschritten werden, wenn die von der Solarkollektorenanordnung in Wärmeenergie umwandelbare Sonnenenergie bei Sonnenuntergang oder an Tagen mit Bewölkung reduziert ist. Auf diese Weise wird der Betrieb der Gasturbine auf die Zeiten begrenzt, in denen keine oder nicht genügend Sonnenenergie zum Erreichen des Grenzwertes zur Verfügung steht, womit die Energienutzungseffizienz bzw. Wirtschaftlichkeit der thermischen Solaranlage weiter erhöht werden.

Gemäß einer Ausführungsform des erfindungsgemäßen Verfahrens wird mittels eines von der Verbrauchereinrichtung während ihres Betriebs bereitgestellten Drehantriebs Elektroenergie erzeugt, die in ein Stromnetz eingespeist wird, wobei mittels eines von der Gasturbine während ihres Betriebs bereitgestellten Drehantriebs Elektroenergie erzeugt wird, die in das Stromnetz eingespeist wird.

Auf diese Weise werden vorteilhaft beide zur Verfügung stehende Drehantriebe zur Stromerzeugung bzw. Elektroenergieerzeugung genutzt, was die Energienutzungseffizienz weiter erhöht.

Gemäß einer weiteren Ausführungsform des erfindungsgemäßen Verfahrens wird, wenn die erste Wärmemenge kleiner als der Grenzwert ist, ein Teil der zweiten Wärmemenge dem durch die Solarkollektoren-Fluidpassage der Solarkollektorenanordnung hindurchströmenden Fluid zugeführt, so dass dieses auf einer vorbestimmten Temperatur gehalten wird.

Mit dieser Ausgestaltung des erfindungsgemäßen Verfahrens ist es vorteilhaft möglich, das Fluid in der Solarkollektoren-Fluidpassage der Solarkollektorenanordnung auf einer Vorwärmtemperatur zu halten, so dass bei einem Wiederanfahren der Wärmeproduktion über die Solarkollektorenanordnung schneller die erste Wärmemenge auf bzw. über den Grenzwert ansteigt und dadurch in der Gasturbine genutztes Brenngas eingespart werden kann.

Gemäß noch einer Ausführungsform des erfindungsgemäßen Verfahrens wird die erste Wärmemenge Wasser als Fluid zugeführt, so dass daraus via solarer Direktverdampfung Wasserdampf erzeugt wird, der in eine Dampfleitung der Heißfluidaufnahmeeinrichtung eingeleitet wird, wobei die zweite Wärmemenge Wasser als Fluid zugeführt wird, so dass daraus Wasserdampf erzeugt wird, der in die Dampfleitung der Heißfluidaufnahmeeinrichtung eingeleitet wird.

Durch die Vermeidung von kostenintensiven speziellen Fluiden, wie z.B. Öl, und die Verwendung von Wasser und Wasserdampf als Fluid können Kosten eingespart werden. Durch die solare Direktverdampfung wird eine weitere Verbesserung der Wirtschaftlichkeit gegenüber z.B. mit einem Wärmeträgeröl als Fluid in der Solarkollektorenanordnung betriebenen solarthermischen Anlagen erzielt. Da auf Öl-spezifische Komponenten verzichtet werden kann, sinken die Kosten und kann gleichzeitig die Prozesstemperatur und damit der Wirkungsgrad gegenüber der Öl-Technologie erhöht werden.

Im Fazit wird gemäß Ausführungsformen der Erfindung eine thermische Solaranlage bereitgestellt, die als CSP-Anlage (Concentrated Solar Power) mit solarer Direktverdampfung konfiguriert ist. Es wird außerdem gemäß Ausführungsformen der Erfindung ein Verfahren zum Betreiben einer solchen thermischen Solaranlage bereitgestellt.

Die Erfindung besteht in der Kombinatorik eines Solarfeldes (Solarkollektorenanordnung) und einer Dampfturbine mit der Anordnung und Einbindung einer Industrie-Gasturbine in den Gesamtprozess.

Gemäß der Erfindung kann bei Sonnenuntergang und somit Unterschreitung des Grenzwertes für die erste Wärmemenge sowie damit abnehmender Dampfproduktion aus dem Solarfeld, die Gasturbine gestartet werden. Der im nachgeschalteten Abhitzekessel produzierte Dampf kann der Dampfturbine zugeführt werden, die in diesem Hybrid-Modus den Nachtbetrieb bevorzugt in Teillast gemäß der zur Verfügung stehenden Dampfmenge aus dem Gasturbinenprozess fährt. An Tagen mit starker Bewölkung und daraus resultierender Unterschreitung des Grenzwertes für die erste Wärmemenge sowie damit abnehmender Dampfproduktion bietet sich ebenfalls die Möglichkeit, mit Hilfe der Gasturbine Dampf zu produzieren und die Dampfturbine kontinuierlich in Teillast zu betreiben.

Die zusätzlich produzierte elektrische Leistung der Gasturbine kann neben der von der Dampfturbine produzierten elektrischen Leistung in das Stromnetz eingespeist werden. Zusätzlich kann Dampf aus dem Abhitzekessel entnommen werden, um das Solarfeld auf einer Vorwärmtemperatur zu halten. Damit wird am Folgetag bzw. bei Abklingen der Bewölkung der Anfahrprozess des Solarfeldes unterstützt und beschleunigt vollzogen. Die jährlichen Volllast-Betriebsstunden der bevorzugt zu einem Kraftwerk kombinierten thermischen Solaranlage im Solarbetrieb können durch den Wegfall der Aufwärmzeiten deutlich erhöht werden. Speziell bei dezentralen Anlagen, für die der wirtschaftliche Einsatz eines thermischen Salzspeichers aus Kostengründen nicht in Frage kommt, bietet sich der Einsatz einer Industrie-Gasturbine zur Überbrückung der Zeiten an, in denen das Solarfeld keinen Dampf produzieren kann.

Die Erfindung beinhaltet ferner die Anordnung der beiden Turbomaschinen, nämlich der Gasturbine und der Dampfturbine mit deren Nebensystemen, wie Generator, Ölsystem und Kühlsystemen. Demnach kann der Turbostrang von Gasturbine, Getriebe, Generator, Getriebe, Dampfturbine als Einwellenanlage mit z.T. zuschaltbaren Kupplungen für den Hybrid-Betrieb ausgeführt sein.

Durch die Erfindung kann der zyklische tägliche Dampfturbinenbetrieb aufgrund der Abhängigkeit/Begrenzung der Sonnenscheinstunden vermieden werden. Dadurch wird das transiente Anfahrverhalten der Dampfturbine begünstigt, was wiederum den Nutzer in die Lage versetzt, eine höhere Wirtschaftlichkeit darzustellen. Durch die verfahrensseitig optimierte Hinzuschaltung der Gasturbine zum CSP-Dampfturbinenprozess kann in den Nachtstunden die Dampfproduktion mittels des nachgeschalteten Abhitzekessels für den kontinuierlichen Dampfturbinenbetrieb aufrechterhalten werden. Außerdem kann die CSP-Anlage mit ihrem Rohrleitungs-System warm gehalten werden, so dass der Anfahrprozess bei Sonnenaufgang bzw. Abklingen der Bewölkung optimiert und schnell erfolgen kann. Der Gesamtnutzungsgrad und damit die Wirtschaftlichkeit wird deutlich verbessert.

Eine nicht näher beschriebene Ausführungsform der thermischen Solaranlage außerhalb der vorliegenden Erfindung weist zusätzlich oder anstelle der Gasturbine einen Gasund/oder Dieselmotor auf. Es bedarf für die Integration des Gas- bzw.

Dieselmotors bei einigen Ausgestaltungen noch zusätzlicher Modifikationen innerhalb der Gesamtanordnung, beispielsweise zusätzliche oder erweiterte Abgasausgänge, Brennstoffzuführungen, Anbindungen an Elektrogeneratoren und Steuerungseinrichtungen.

Im Folgenden wird die Erfindung anhand einer bevorzugten Ausführungsform und unter Bezugnahme auf die beigefügten Figuren detaillierter beschrieben.
- Fig.1: zeigt ein schematisches Schaltbild einer thermischen Solaranlage gemäß einer Ausführungsform der Erfindung.
- Fig.2: zeigt eine perspektivische Darstellung der in Form einer Einwellenanlage gestalteten Anordnung von Gasturbine, Dampfturbine und Elektrogenerator einer thermischen Solaranlage gemäß einer Ausführungsform der Erfindung.

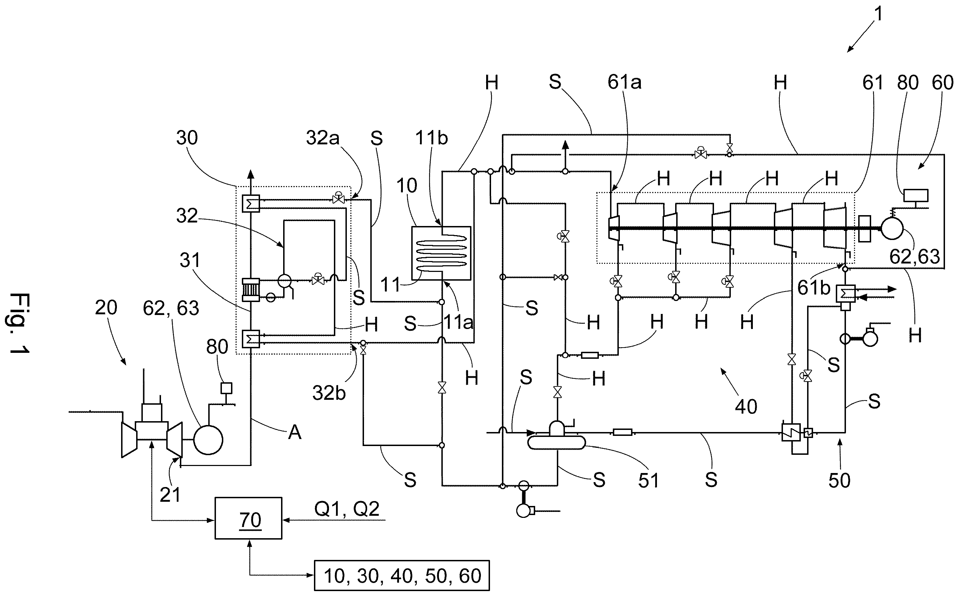

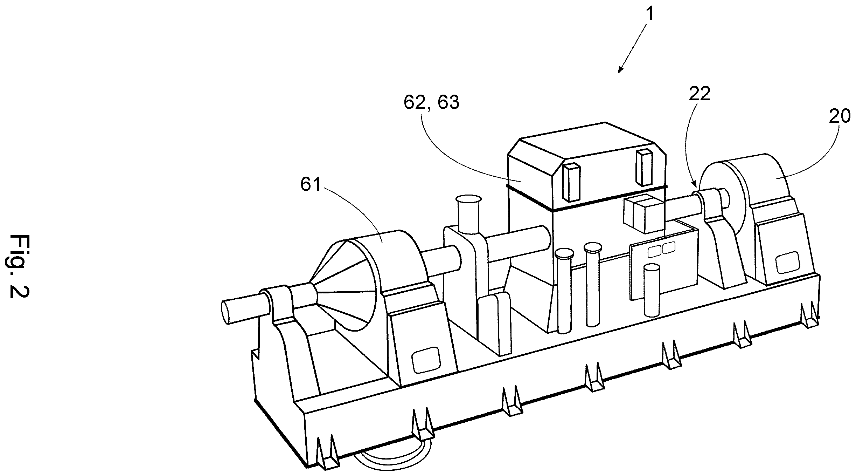

Im Folgenden werden unter Bezugnahme auf die Figuren 1 und 2 Ausführungsformen einer thermischen Solaranlage 1 gemäß der Erfindung beschrieben.

Die thermische Solaranlage 1 ist als zu einem elektrischen Kraftwerk kombinierte CSP-Anlage (Concentrated Solar Power) mit solarer Direktverdampfung konfiguriert. Wie Fig.1 zeigt, weist die thermische Solaranlage 1 eine Solarkollektorenanordnung 10 mit einer Mehrzahl von Solarkollektoren (nicht im Einzelnen gezeigt), eine Gasturbine 20, einen Abgaswärmetauscher 30, eine Heißfluidaufnahmeeinrichtung 40, eine Speisefluidaufnahmeeinrichtung 50, eine Verbrauchereinrichtung 60 und eine Steuereinrichtung 70 auf.

Die Steuereinrichtung 70 kann bevorzugt als elektrische bzw. elektronische Steuereinrichtung ausgebildet sein und Steueralgorithmen in Form von Software, Firmware und/oder Hardware enthalten. Die Steuereinrichtung 70 ist mit der Solarkollektorenanordnung 10, der Gasturbine 20, dem Abgaswärmetauscher 30, der Heißfluidaufnahmeeinrichtung 40, der Speisefluidaufnahmeeinrichtung 50 und der Verbrauchereinrichtung 60 zum Steuern bzw. Regeln dieser verbunden.

Die Heißfluidaufnahmeeinrichtung 40 weist eine Mehrzahl von Dampfleitungen H wie Leitungsrohren sowie eine Mehrzahl von von der Steuereinrichtung 70 ansteuerbaren Stellventilen (nicht bezeichnet) auf.

Die Speisefluidaufnahmeeinrichtung 50 weist eine Mehrzahl von Wasserleitungen S wie Leitungsrohren sowie eine Mehrzahl von von der Steuereinrichtung 70 ansteuerbaren Stellventilen (nicht bezeichnet), Pumpen (nicht bezeichnet) und weiteren Komponenten (nicht bezeichnet) wie Wärmetauschern, Wasserabscheidern usw. auf.

Gemäß der Erfindung führen die Dampfleitungen H Wasserdampf und führen die Wasserleitungen S Wasser bzw. Speisewasser und/oder ggf. Wasserdampf auf einem gegenüber dem Wasserdampf in den Dampfleitungen H reduzierten Temperaturniveau.

Die Solarkollektorenanordnung 10 definiert eine Solarkollektoren-Fluidpassage 11 zum Hindurchleiten eines Fluids, so dass dem Fluid von auf die Solarkollektoren auftreffender Sonneneinstrahlung eine erste Wärmemenge Q1 zuführbar ist. Die Solarkollektoren-Fluidpassage 11 weist einen ersten Fluideinspeiseanschluss 11a zum in die Solarkollektoren-Fluidpassage 11 Einspeisen von zu erwärmendem Fluid in Form von Speisewasser und einen ersten Fluidabgabeanschluss 11b auf zum aus der Solarkollektoren-Fluidpassage 11 Abgeben von erwärmtem Fluid in Form von Wasserdampf.

Demgemäß ist die Solarkollektorenanordnung 10 eingerichtet, via solarer Direktverdampfung von Wasser über die Zuführung der ersten Wärmemenge Q1 Wasserdampf zu erzeugen. Mit anderen Worten ist die Solarkollektorenanordnung 10 eingerichtet, durch die Solarkollektoren-Fluidpassage 11 hindurchströmendes Fluid in Form von Wasser via solarer Direktverdampfung zu am ersten Fluidabgabeanschluss 11b entnehmbarem Wasserdampf zu verdampfen. Die Solarkollektorenanordnung 10 erreicht dabei Frischdampfparameter von 40 bar und 400°C.

Die Gasturbine 20 wird mit Erdgas als Brenngas betrieben und weist einen Abgasausgang 21 auf, der über eine Abgasleitung A an eine Abgaspassage 31 des Abgaswärmetauschers 30 angeschlossen ist zum durch die Abgaspassage 31 Hindurchleiten von heißem Abgas der Gasturbine 20.

Der Abgaswärmetauscher 30 ist von einem Abhitzekessel gebildet und hat eine Wärmetauscher-Fluidpassage 32 zum Hindurchleiten eines Fluids, so dass dem Fluid von dem durch die Abgaspassage 31 hindurchströmenden Abgas eine zweite Wärmemenge Q2 zuführbar ist. Die Wärmetauscher-Fluidpassage 32 weist einen zweiten Fluideinspeiseanschluss 32a zum in die Wärmetauscher-Fluidpassage 32 Einspeisen von zu erwärmendem Fluid in Form von Wasser und einen zweiten Fluidabgabeanschluss 32b auf zum aus der Wärmetauscher-Fluidpassage 32 Abgeben von erwärmtem Fluid in Form von Wasserdampf.

Der Abgaswärmetauscher 30 ist somit eingerichtet, durch die Wärmetauscher-Fluidpassage 32 hindurchströmendes Fluid in Form von Wasser über die Zuführung der zweiten Wärmemenge Q2 zu am zweiten Fluidabgabeanschluss 32b entnehmbarem Wasserdampf zu verdampfen.

Wie aus Fig.1 ersichtlich, ist die Heißfluidaufnahmeeinrichtung 40 über eine oder mehrere Dampfleitungen H direkt mit dem ersten Fluidabgabeanschluss 11b der Solarkollektoren-Fluidpassage 11 fluidverbunden. Außerdem fluidverbindet die Heißfluidaufnahmeeinrichtung 40 über eine oder mehrere Dampfleitungen H den zweiten Fluidabgabeanschluss 32b der Wärmetauscher-Fluidpassage 32 unter Umgehung der Solarkollektoren-Fluidpassage 11 direkt mit dem ersten Fluidabgabeanschluss 11b.

Die Verbrauchereinrichtung 60 weist eine Dampfturbine 61 und einen von der Dampfturbine 61 drehantreibbaren Elektrogenerator 62 auf. Die Dampfturbine 61 hat einen Fluideingang 61a und einen Fluidausgang 61b.

Der Fluideingang 61a ist mit der Heißfluidaufnahmeeinrichtung 40 verbunden, so dass zumindest ein Teil der ersten und zweiten Wärmemengen Q1, Q2 über ein Fluid der Verbrauchereinrichtung 60 zuführbar ist. In der gezeigten Ausführungsform ist der Fluideingang 61a über eine oder mehrere Dampfleitungen H der Heißfluidaufnahmeeinrichtung 40 direkt mit dem ersten Fluidabgabeanschluss 11b der Solarkollektoren-Fluidpassage 11 und direkt mit dem zweiten Fluidabgabeanschluss 32b der Wärmetauscher-Fluidpassage 32 fluidverbunden.

Der Fluidausgang 61b ist über eine oder mehrere Wasserleitungen S und weitere Komponenten (wie einen Speisewassersammelbehälter 51) der Speisefluidaufnahmeeinrichtung 50 mit dem ersten Fluideinspeiseanschluss 11a der Solarkollektoren-Fluidpassage 11 und dem zweiten Fluideinspeiseanschluss 32a der Wärmetauscher-Fluidpassage 32 fluidverbunden. Wie aus Fig.1 ersichtlich, sind außerdem der erste und der zweite Fluideinspeiseanschluss 11a, 32a über eine oder mehrere Wasserleitungen S der Speisefluidaufnahmeeinrichtung 50 miteinander fluidverbunden.

Die Steuereinrichtung 70 ist gemäß der Erfindung eingerichtet, einen Betrieb der Gasturbine 20 in Abhängigkeit von einer Größe der ersten Wärmemenge Q1 zu steuern. Gemäß einer Ausführungsform der erfindungsgemäßen thermischen Solaranlage 1 ist die Steuereinrichtung 70 eingerichtet, die Gasturbine 20 nur dann in Betrieb zu nehmen, wenn die erste Wärmemenge Q1 einen vorbestimmten Grenzwert unterschreitet.

Dieser Grenzwert kann gemäß der Erfindung unterschritten werden, wenn die von der Solarkollektorenanordnung 10 in Wärmeenergie umwandelbare Sonnenenergie bei Sonnenuntergang oder an Tagen mit Bewölkung reduziert ist.

Gemäß einer weiteren Ausführungsform der erfindungsgemäßen thermischen Solaranlage 1 ist die Steuereinrichtung 70 eingerichtet, wenn die erste Wärmemenge Q1 den vorbestimmten Grenzwert unterschreitet, einen Teil der zweiten Wärmemenge Q2 dem durch die Solarkollektoren-Fluidpassage 11 hindurchströmenden Fluid zuzuführen, so dass dieses auf einer vorbestimmten Temperatur, nämlich einer Vorwärmtemperatur, gehalten wird.

Wie oben erwähnt, weist die Verbrauchereinrichtung 60 den Elektrogenerator 62 auf, der bei Drehantrieb Elektroenergie in ein Stromnetz 80 einspeist. Wie aus Fig.1 ersichtlich, kann auch die Gasturbine 20 mit einem Elektrogenerator 63 drehantriebsverbunden sein, so dass der Elektrogenerator 63 bei Drehantrieb Elektroenergie in das Stromnetz 80 einspeist.

Gemäß einer in Fig.2 gezeigten Ausführungsform der erfindungsgemäßen thermischen Solaranlage 1 sind die Gasturbine 20, die Dampfturbine 61 und ein einziger Elektrogenerator 62 oder 63 in Form einer Einwellenanlage bzw. in einer Flucht auf einer gemeinsamen Achse angeordnet. Die Gasturbine 20 ist über eine von der Steuereinrichtung 70 ansteuerbare Kupplung 22 selektiv in und außer Drehantriebsverbindung mit dem Elektrogenerator 62, 63 bringbar. Gemäß einer in Fig.2 nicht gezeigten Ausführungsform der erfindungsgemäßen thermischen Solaranlage 1 kann z.B. für Wartungszwecke auch die Dampfturbine 61 über eine von der Steuereinrichtung 70 ansteuerbare Kupplung selektiv in und außer Drehantriebsverbindung mit dem Elektrogenerator 62, 63 bringbar sein.

Nun werden unter Bezugnahme auf die Figuren 1 und 2 Ausführungsformen eines erfindungsgemäßen Verfahrens zum Betreiben der erfindungsgemäßen thermischen Solaranlage 1 beschrieben. Das Verfahren weist zumindest die Schritte auf: mittels der Solarkollektorenanordnung 10 Zuführen der ersten Wärmemenge Q1 zu dem durch die Solarkollektoren-Fluidpassage 11 der Solarkollektorenanordnung 10 hindurchströmenden Fluid und Übertragen zumindest eines Teils der ersten Wärmemenge Q1 auf die Heißfluidaufnahmeeinrichtung 40; in der Steuervorrichtung 70 Vergleichen der ersten Wärmemenge Q1 mit dem Grenzwert; wenn die erste Wärmemenge Q1 kleiner als der Grenzwert ist, in Betrieb nehmen der Gasturbine 20 und mittels des an den Abgasausgang 21 der Gasturbine 20 angeschlossenen Abgaswärmetauschers 30 Zuführen der zweiten Wärmemenge Q2 zu dem durch die Wärmetauscher-Fluidpassage 32 des Abgaswärmetauschers 30 hindurchströmenden Fluid und unter Umgehung der Solarkollektoren-Fluidpassage 11 Übertragen zumindest eines Teils der zweiten Wärmemenge Q2 auf die Heißfluidaufnahmeeinrichtung 40; und mittels eines Fluids Zuführen von zumindest einem Teil der ersten und zweiten Wärmemengen Q1, Q2 zu der Verbrauchereinrichtung 60.

Gemäß einer Ausführungsform des erfindungsgemäßen Verfahrens wird mittels des von der Dampfturbine 61 der Verbrauchereinrichtung 60 während ihres Betriebs bereitgestellten Drehantriebs Elektroenergie erzeugt, die in das Stromnetz 80 eingespeist wird, wobei außerdem mittels des von der Gasturbine 20 während ihres Betriebs bereitgestellten Drehantriebs Elektroenergie erzeugt wird, die in das Stromnetz 80 eingespeist wird.

Gemäß des erfindungsgemäßen Verfahrens wird, wenn die erste Wärmemenge Q1 kleiner als der Grenzwert ist, ein Teil der zweiten Wärmemenge Q2 dem durch die Solarkollektoren-Fluidpassage 11 der Solarkollektorenanordnung 10 hindurchströmenden Fluid zugeführt, so dass dieses auf der vorbestimmten Temperatur (Vorwärmtemperatur) gehalten wird.

Gemäß des erfindungsgemäßen Verfahrens wird die erste Wärmemenge Q1 Wasser als Fluid zugeführt, so dass daraus via solarer Direktverdampfung Wasserdampf erzeugt wird, der in eine oder mehrere Dampfleitungen H der Heißfluidaufnahmeeinrichtung 40 eingeleitet wird, wobei die zweite Wärmemenge Q2 Wasser als Fluid zugeführt wird, so dass daraus Wasserdampf erzeugt wird, der in die eine oder die mehreren Dampfleitungen H der Heißfluidaufnahmeeinrichtung 40 eingeleitet wird.

Gemäß der Erfindung kann bei Sonnenuntergang und somit Unterschreitung des Grenzwertes für die erste Wärmemenge Q1 sowie damit abnehmender Dampfproduktion aus der Solarkollektorenanordnung 10, die Gasturbine 20 gestartet werden. Der im nachgeschalteten Abgaswärmetauscher 30 produzierte Wasserdampf kann der Dampfturbine 61 zugeführt werden, die in diesem Hybrid-Modus den Nachtbetrieb bevorzugt in Teillast gemäß der zur Verfügung stehenden Dampfmenge aus dem Gasturbinenprozess fährt. An Tagen mit starker Bewölkung und daraus resultierender Unterschreitung des Grenzwertes für die erste Wärmemenge Q1 sowie damit abnehmender Dampfproduktion bietet sich ebenfalls die Möglichkeit, mit Hilfe der Gasturbine 20 Wasserdampf zu produzieren und die Dampfturbine 61 kontinuierlich in Teillast zu betreiben.

Die zusätzlich produzierte elektrische Leistung der Gasturbine 20 kann neben der von der Dampfturbine 61 produzierten elektrischen Leistung in das Stromnetz 80 eingespeist werden. Zusätzlich kann Wasserdampf aus dem Abgaswärmetauscher 30 entnommen werden, um die Solarkollektorenanordnung 10 auf der Vorwärmtemperatur zu halten. Damit wird am Folgetag bzw. bei Abklingen der Bewölkung der Anfahrprozess der Solarkollektorenanordnung 10 unterstützt und beschleunigt vollzogen.

Bei der oben beschriebenen Ausführungsform kann für ISO-Bedingungen z.B. somit in der Nacht mit z.B. 8,43 MW nahezu eine Nominalleistung von 9 MW des elektrischen Kraftwerks elektrisch aufrecht erhalten werden. Der zusätzliche Erdgasbedarf für die Gasturbine 20 kann sich z.B. auf 0,425 kg/s belaufen. Im reinen Solarbetrieb ohne Gasturbine 20 kann z.B. ein Bruttowirkungsgrad von 29,4 % erreicht werden, und im Hybridbetrieb mit Gasturbine 20 und Dampfturbine 61 kann z.B. ein Bruttowirkungsgrad von 39,7 % erreicht werden.

An dieser Stelle sei noch erwähnt, dass die beanspruchte Vorrichtung sich ebenfalls in Kombination mit einem Großdieselmotor eignet. Beispielsweise kann die Energie der Abgase des Großdieselmotors zum Betreiben von Teilkomponenten, z.B. der Gas- oder Dampfturbine, der beanspruchten Vorrichtung verwendet werden.

### Bezugszeichenliste

- 1: thermische Solaranlage
- 10: Solarkollektorenanordnung
- 11: Solarkollektoren-Fluidpassage
- 11a: erster Fluideinspeiseanschluss
- 11 b: erster Fluidabgabeanschluss
- 20: Gasturbine / Gasmotor / Dieselmotor
- 21: Abgasausgang
- 22: Kupplung
- 30: Abgaswärmetauscher
- 31: Abgaspassage
- 32: Wärmetauscher-Fluidpassage
- 32a: zweiter Fluideinspeiseanschluss
- 32b: zweiter Fluidabgabeanschluss
- 40: Heißfluidaufnahmeeinrichtung
- H: Dampfleitung
- 50: Speisefluidaufnahmeeinrichtung
- S: Wasserleitung
- 51: Speisewassersammelbehälter
- 60: Verbrauchereinrichtung
- 61: Dampfturbine
- 61a: Fluideingang
- 61b: Fluidausgang
- 62: Elektrogenerator
- 63: Elektrogenerator
- 70: Steuereinrichtung
- 80: Stromnetz
- Q1: erste Wärmemenge
- Q2: zweite Wärmemenge
- A: Abgasleitung

## Patentansprüche

1. Thermische Solaranlage (1) mit:
einer Solarkollektorenanordnung (10) mit einer Mehrzahl von Solarkollektoren, wobei die Solarkollektorenanordnung (10) eine Solarkollektören-Fluidpassage (11) definiert zum Hindurchleiten eines Fluids, so dass dem Fluid von auf die Solarkollektoren auftreffender Sonneneinstrahlung eine erste Wärmemenge (Q1) zuführbar ist, und wobei die Solarkollektoren-Fluidpassage (11) einen ersten Fluideinspeiseanschluss (11a) zum in die Solarkollektoren-Fluidpassage (11) Einspeisen von zu erwärmendem Fluid und einen ersten Fluidabgabeanschluss (11b) zum aus der Solarkollektoren-Fluidpassage (11) Abgeben von erwärmtem Fluid aufweist;
einer Gasturbine (20) mit einem Abgasausgang (21);
einem Abgaswärmetauscher (30) mit einer Abgaspassage (31), die an den Abgasausgang (21) der Gasturbine (20) angeschlossen ist zum durch die Abgaspassage (31) Hindurchleiten von heißem Abgas der Gasturbine (20), und einer Wärmetauscher-Fluidpassage (32) zum Hindurchleiten eines Fluids, so dass dem Fluid von dem durch die Abgaspassage (31) hindurchströmenden Abgas eine zweite Wärmemenge (Q2) zuführbar ist, wobei die Wärmetauscher-Fluidpassage (32) einen zweiten Fluideinspeiseanschluss (32a) zum in die Wärmetauscher-Fluidpassage (32) Einspeisen von zu erwärmendem Fluid und einen zweiten Fluidabgabeanschluss (32b) zum aus der Wärmetauscher-Fluidpassage (32) Abgeben von erwärmtem Fluid aufweist;
einer Heißfluidaufnahmeeinrichtung (40), die mit dem ersten Fluidabgabeanschluss (11b) direkt fluidverbunden ist und die den zweiten Fluidabgabeanschluss (32b) unter Umgehung der Solarkollektoren-Fluidpassage (11) direkt mit dem ersten Fluidabgabeanschluss (11b) fluidverbindet und dadurch die Solarkollektoren-Fluidpassage (11) und die Wärmetauscher-Fluidpassage (32) parallel geschaltet werden;
einer Verbrauchereinrichtung (60) mit einem Fluideingang (61 a), der mit der Heißfluidaufnahmeeinrichtung (40) verbunden ist, so dass zumindest ein Teil der ersten und zweiten Wärmemengen (Q1, Q2) über ein Fluid der Verbrauchereinrichtung (60) zuführbar ist;
wobei das durch die Solarkollektoren-Fluidpassage (11) und durch die Wärmetauscher-Fluidpassage (32) hindurchzuleitende Fluid von Wasser gebildet ist, und wobei das der Verbrauchereinrichtung (60) über deren Fluideingang (61 a) zuzuführende Fluid von Wasserdampf gebildet ist; und
einer elektronischen Steuereinrichtung (70) mit Steueralgorithmen in Form von Software, Firmware und/oder Hardware, die mit der Gasturbine (20) verbunden ist und die eingerichtet ist, einen Betrieb der Gasturbine (20) in Abhängigkeit von einer Größe der ersten Wärmemenge (Q1) zu steuern, wobei die Steuereinrichtung (70) eingerichtet ist, die Gasturbine (20) nur dann in Betrieb zu nehmen, wenn die erste Wärmemenge (Q1) einen vorbestimmten Grenzwert unterschreitet.

2. Thermische Solaranlage (1) gemäß Anspruch 1, wobei die Steuereinrichtung (70) eingerichtet ist, wenn die erste Wärmemenge (Q1) den vorbestimmten Grenzwert unterschreitet, einen Teil der zweiten Wärmemenge (Q2) dem durch die Solarkollektoren-Fluidpassage (11) hindurchströmenden Fluid zuzuführen, so dass dieses auf einer vorbestimmten Temperatur gehalten wird.

3. Thermische Solaranlage (1) gemäß Anspruch 1, wobei der erste und der zweite Fluideinspeiseanschluss (11a, 32a) miteinander fluidverbunden sind, wobei der Abgaswärmetauscher (30) von einem Abhitzekessel gebildet ist, der eingerichtet ist, durch die Wärmetauscher-Fluidpassage (32) hindurchströmendes Fluid zu am zweiten Fluidabgabeanschluss (32b) entnehmbarem Wasserdampf zu verdampfen, und wobei die Solarkollektorenanordnung (10) eingerichtet ist, durch die Solarkollektoren-Fluidpassage (11) hindurchströmendes Fluid via solarer Direktverdampfung zu am ersten Fluidabgabeanschluss (11 b) entnehmbarem Wasserdampf zu verdampfen.

4. Thermische Solaranlage (1) gemäß einem der Ansprüche 1 bis 3, wobei die Verbrauchereinrichtung (60) eine Dampfturbine (61) und einen von der Dampfturbine (61) drehantreibbaren Elektrogenerator (62, 63) aufweist.

5. Thermische Solaranlage (1) gemäß Anspruch 4, wobei die Gasturbine (20), die Dampfturbine (61) und der Elektrogenerator (62, 63) in Form einer Einwellenanlage angeordnet sind, und wobei die Gasturbine (20) über eine von der Steuereinrichtung (70) ansteuerbare Kupplung (22) selektiv in und außer Drehantriebsverbindung mit dem Elektrogenerator (62, 63) bringbar ist.

6. Thermische Solaranlage (1) nach einem der vorherigen Ansprüche, mit einem Gas- und/oder Dieselmotor (20) zusätzlich zu oder anstelle der Gasturbine (20).

7. Verfahren zum Betreiben einer thermischen Solaranlage (1), aufweisend:
mittels einer Solarkollektorenanordnung (10) Zuführen einer ersten Wärmemenge (Q1) zu einem durch eine Solarkollektoren-Fluidpassage (11) der Solarkollektorenanordnung (10) hindurchströmenden Fluid, wobei das Fluid aus Wasser gebildet ist, und Übertragen zumindest eines Teils der ersten Wärmemenge (Q1) auf eine Heißfluidaufnahmeeinrichtung (40);
Vergleichen der ersten Wärmemenge (Q1) mit einem Grenzwert;
nur wenn die erste Wärmemenge (Q1) kleiner als der Grenzwert ist, in Betrieb nehmen einer Gasturbine (20) und mittels eines an einen Abgasausgang (21) der Gasturbine (20) angeschlossenen Abgaswärmetauschers (30) Zuführen einer zweiten Wärmemenge (Q2) zu einem durch eine Wärmetauscher-Fluidpassage (32) des Abgaswärmetauschers (30) hindurchströmenden Fluid, wobei das Fluid durch Wasser gebildet ist, und unter Umgehung der Solarkollektoren-Fluidpassage (11) Übertragen zumindest eines Teils der zweiten Wärmemenge (Q2) auf die Heißfluidaufnahmeeinrichtung (40); und
mittels eines Fluids Zuführen von zumindest einem Teil der ersten und zweiten Wärmemengen (Q1, Q2) zu einer Verbrauchereinrichtung (60), wobei das der Verbrauchereinrichtung (60) über deren Fluideingang (61a) zuzuführende Fluid von Wasserdampf gebildet ist.

8. Verfahren gemäß Anspruch 7, wobei mittels eines von der Verbrauchereinrichtung (60) während ihres Betriebs bereitgestellten Drehantriebs Elektroenergie erzeugt wird, die in ein Stromnetz (80) eingespeist wird, und wobei mittels eines von der Gasturbine (20) während ihres Betriebs bereitgestellten Drehantriebs Elektroenergie erzeugt wird, die in das Stromnetz (80) eingespeist wird.

9. Verfahren gemäß Anspruch 7 oder 8, wobei, wenn die erste Wärmemenge (Q1) kleiner als der Grenzwert ist, ein Teil der zweiten Wärmemenge (Q2) dem durch die Solarkollektoren-Fluidpassage (11) der Solarkollektorenanordnung (10) hindurchströmenden Fluid zugeführt wird, so dass dieses auf einer vorbestimmten Temperatur gehalten wird.

10. Verfahren nach einem der Ansprüche 7 bis 9, mit einem Gas- und/oder Dieselmotor (20) zusätzlich zu oder anstelle der Gasturbine (20).

## Claims

1. Thermal solar system (1) having:
a solar collector array (10) having a plurality of solar collectors, wherein the solar collector array (10) defines a solar collector fluid passage (11) for conducting a fluid, so that the fluid can be supplied a first heat quantity (Q1) from solar radiation impinging on the solar collectors, and wherein the solar collector fluid passage (11) comprises a first fluid feed connection (11a) for fluid to be heated to be fed into the solar collector fluid passage (11) and
a first fluid discharge connection (11b) for discharging heated fluid from the solar collector fluid passage (11);
a gas turbine (20) with an exhaust gas outlet (21); an exhaust gas heat exchanger (30) with an exhaust gas passage (31), which is connected to the exhaust gas outlet (21) of the gas turbine (20) for conducting hot exhaust gas of the gas turbine (20) through the exhaust gas passage (31), and a heat exchanger fluid passage (32) for conducting a fluid, so that the fluid can be supplied with a second heat quantity (Q2) from the exhaust gas flowing through the exhaust gas passage (31), wherein the heat exchanger fluid passage (32) comprises a second fluid feed connection (32a) for feeding heated fluid into the heat exchanger fluid passage (32) and a second fluid discharge connection (32b) for discharging heated fluid from the heat exchanger fluid passage (32);
a hot fluid receiving device (40), which is directly fluidically connected to the first fluid discharge connection (11b) and which, bypassing the solar collector fluid passage (11), directly fluidically connects the second fluid discharge connection (32b) to the first fluid discharge connection (11b) and because of this the solar collector fluid passage (11) and the heat exchanger fluid passage (32) are connected in parallel;
a consumer device (60) having a fluid inlet (61a), which is connected to a hot fluid receiving device (40), so that at least one part of the first and second heat quantities (Q1, Q2) can be fed to the consumer device (60) via a fluid; and
an electronic control device (70) with control algorithm in the form of software, firmware and/or hardware which is connected to the gas turbine (20) and which is equipped to control an operation of the gas turbine (20) as a function of a magnitude of the first heat quantity (Q1).

2. The thermal solar system (1) according to Claim 1, wherein the control device (70) is equipped to put the gas turbine (20) into operation only when the first heat quantity (Q1) undershoots a predetermined limit value.

3. The thermal solar system (1) according to Claim 2, wherein the control device (70) is equipped, when the first heat quantity (Q1) undershoots the predetermined limit value, to supply a part of the second heat quantity (Q2) to the fluid flowing through the solar collector fluid passage (11), so that the same is held at a predetermined temperature.

4. The thermal solar system (1) according to any one of the Claims 1 to 3, wherein the fluid to be conducted through the solar collector fluid passage (11) and through the heat exchanger fluid passage (32) is formed by water, and wherein the fluid to be fed to the consumer device (60) via the fluid inlet (61a) of the same is formed by steam.

5. The thermal solar system (1) according to Claim 4, wherein the first and the second fluid feed connection (11a, 32a) are fluidically connected to one another, wherein the exhaust gas heat exchanger (30) is formed by a waste heat boiler, which is equipped to evaporate fluid flowing through the heat exchanger fluid passage (32) into steam that is extractable at the second fluid discharge connection (32b), and wherein the solar collector array (10) is equipped to evaporate fluid flowing through the solar collector fluid passage (11) via solar direct evaporation into steam that is extractable at the first fluid discharge connection (11b).

6. The thermal solar system (1) according to any one of the Claims 1 to 5, wherein the consumer device (60) comprises a steam turbine (61) and an electric generator (62, 63) that is rotatably driveable by the steam turbine (61).

7. The thermal solar system (1) according to Claim 6, wherein the gas turbine (20), the steam turbine (61) and the electric generator (62, 63) are arranged in the form of a single-shaft system, and wherein the gas turbine (20) can be selectively brought into and out of rotary drive engagement with the electric generator (62, 63) via a clutch (22) that can be activated by the control device (70).

8. The thermal solar system (1) according to any one of the preceding claims, having a gas and/or diesel engine (20) in addition to or instead of the gas turbine (20).

9. A method for operating a thermal solar system (1), comprising: feeding a first heat quantity (Q1) by means of a solar collector array (10) to a fluid flowing through a solar collector fluid passage (11) of the solar collector array (10) and transferring at least one part of the first heat quantity (Q1) to a hot fluid receiving device (40);
comparing the first heat quantity (Q1) with a limit value;
if the first heat quantity (Q1) is smaller than the limit value, putting into operation a gas turbine (20) and feeding a second heat quantity (Q2), by means of an exhaust gas heat exchanger (30) connected to an exhaust gas outlet (21) of the gas turbine (20), to a fluid flowing through a heat exchanger fluid passage (32) of the exhaust gas heat exchanger (30) and, bypassing the solar collector fluid passage (11), transferring at least one part of the second heat quantity (Q2) to the hot fluid receiving device (40); and
feeding at least one part of the first and second heat quantities (Q1, Q2) by means of a fluid to a consumer device (60).

10. The method according to Claim 9, wherein by means of a rotary drive provided by the consumer device (60) during its operation, electric energy is generated, which is fed into a power grid (80), and wherein by means of a rotary drive provided by the gas turbine (20) during its operation, electric energy is generated which is fed into the power grid (80).

11. The method according to Claim 9 or 10, wherein, when the first quantity (Q1) is smaller than the limit value, a part of the second heat quantity (Q2) is fed to the fluid flowing through the solar collector fluid passage (11) of the solar collector array (10), so that the same is maintained at a predetermined temperature.

12. The method according to any one of the Claims 9 to 11, having a gas and/or diesel engine (20) in addition to or instead of the gas turbine (20).

## Revendications

1. Système solaire thermique (1) comportant:
un agencement de capteur solaire (10) avec une pluralité de capteurs solaires, l'agencement de capteur solaire (10) définissant un passage de fluide de capteur solaire (11) pour le passage d'un fluide de sorte qu'une première quantité de chaleur (Q1) puisse être fournie au fluide à partir du rayonnement solaire incident sur les capteurs solaires, et dans lequel le passage de fluide de collecteur solaire (11) présente un premier raccord d'alimentation en fluide (11a) pour amener le fluide à chauffer dans le passage de fluide de collecteur solaire (11) et un premier raccord de décharge de fluide (11b) pour décharger le fluide chauffé du passage de fluide de collecteur solaire (11);
une turbine à gaz (20) comportant une sortie de gaz d'échappement (21);
un échangeur de chaleur de gaz d'échappement (30) avec un passage de gaz d'échappement (31) qui est raccordé à la sortie de gaz d'échappement (21) de la turbine à gaz (20) pour faire passer les gaz d'échappement chauds de la turbine à gaz (20) à travers le passage de gaz d'échappement (31), et un passage de fluide d'échangeur de chaleur (32) pour faire passer un fluide à travers, de sorte qu'une seconde quantité de chaleur (Q2) puisse être fournie au fluide à partir du gaz d'échappement circulant à travers le passage de gaz d'échappement (31), le passage de fluide d'échangeur de chaleur (32) ayant un second raccord d'alimentation en fluide (32a) ) pour amener le fluide à chauffer dans le passage de fluide d'échangeur de chaleur (32) et un deuxième raccord de décharge de fluide (32b) pour décharger le fluide chauffé du passage de fluide d'échangeur de chaleur (32);
un dispositif de réception de fluide chaud (40) qui est directement raccordé fluidiquement au premier raccord de décharge de fluide (11b) et qui relie fluidiquement le second raccord de décharge de fluide (32b) en contournant le passage de fluide de collecteur solaire (11) directement au premier raccord de décharge de fluide (11b) et relie ainsi fluidiquement le passage de fluide de collecteur solaire (11) et de la sorte le passage de fluide d'échangeur de chaleur (32) sont raccordés en parallèle;
un dispositif consommateur (60) ayant une entrée de fluide (61 a) qui est raccordé au dispositif de réception de fluide chaud (40) de sorte qu'au moins une partie des première et seconde quantités de chaleur (Q1, Q2) puisse être fournie au dispositif consommateur (60) via un fluide; et
un dispositif de commande électronique (70) avec des algorithmes de commande sous forme de logiciel, micrologiciel et/ou matériel, qui est raccordé à la turbine à gaz (20) et qui est configuré pour faire fonctionner la turbine à gaz (20) en fonction d'une taille de la première quantité de chaleur (Q1) à commander.

2. Système solaire thermique (1) selon la revendication 1, dans lequel le dispositif de commande (70) est configuré pour démarrer la turbine à gaz (20) uniquement lorsque la première quantité de chaleur (Q1) tombe en dessous d'une valeur limite prédéterminée.

3. Système solaire thermique (1) selon la revendication 2, dans lequel le dispositif de commande (70) est conçu, lorsque la première quantité de chaleur (Q1) tombe en dessous de la valeur limite prédéterminée, pour alimenter une partie de la deuxième quantité de chaleur (Q2) circulant à travers le passage de fluide du capteur solaire (11), de sorte qu'il soit maintenu à une température prédéterminée.

4. Système solaire thermique (1) selon une des revendications 1 à 3, dans lequel le fluide à faire passer à travers le passage de fluide du capteur solaire (11) et à travers le passage de fluide de l'échangeur de chaleur (32) est formé par de l'eau, et dans lequel le fluide à alimenter dans le dispositif consommateur (60) via l'entrée de fluide (61a) est formé de vapeur d'eau.

5. Système solaire thermique (1) selon la revendication 4, dans lequel le premier et le second raccord d'alimentation en fluide (11a, 32a) sont reliés fluidiquement l'un à l'autre, dans lequel l'échangeur de chaleur de gaz d'échappement (30) est formé par une chaudière de récupération de chaleur qui est configurée afin d'évaporer le fluide s'écoulant à travers le passage de fluide d'échangeur de chaleur (32). en vapeur d'eau qui peut être prélevée au deuxième raccord de distribution de fluide (32b), et dans lequel l'agencement de capteur solaire (10) est configuré pour évaporer le fluide s'écoulant à travers le passage de fluide de capteur solaire (11) via une évaporation solaire directe en vapeur d'eau qui peut être prélevée au niveau du premier raccord de distribution de fluide (11b).

6. Système solaire thermique (1) selon une des revendications 1 à 5, dans lequel le dispositif consommateur (60) comporte une turbine à vapeur (61) et un générateur électrique (62, 63) pouvant être mis en rotation par la turbine à vapeur (61).

7. Système solaire thermique (1) selon la revendication 6, dans lequel la turbine à gaz (20), la turbine à vapeur (61) et le générateur électrique (62, 63) sont agencés sous la forme d'un système à un seul arbre, et dans lequel la turbine à gaz (20) via un couplage contrôlable (22) par un des dispositifs de commande (70) peut être amené sélectivement dans et hors de la connexion d'entraînement rotatif avec le générateur électrique (62, 63).

8. Système solaire thermique (1) selon une des revendications précédentes, comportant un moteur à gaz et/ou diesel (20) en complément ou à la place de la turbine à gaz (20).

9. Procédé pour faire fonctionner un système solaire thermique (1), comprenant de:
au moyen d'un agencement de capteur solaire (10) fournissant une première quantité de chaleur (Q1) à un fluide s'écoulant à travers un passage de fluide de capteur solaire (11) de l'agencement de capteur solaire (10) et transférant au moins une partie de la première quantité de chaleur (Q1) à un dispositif de réception de fluide chaud (40);
comparer la première quantité de chaleur (Q1) avec une valeur limite;
si la première quantité de chaleur (Q1) est inférieure à la valeur limite, mettre en fonctionnement une turbine à gaz (20) et alimenter une seconde quantité de chaleur (Q2) au moyen d'un échangeur de chaleur de gaz d'échappement (30) relié à une sortie de gaz d'échappement (21) de la turbine à gaz (20) dans un fluide s'éculant à travers un passage de fluide d'échangeur de chaleur (32) de l'échangeur de chaleur de gaz d'échappement (30) et en contournant le passage de fluide de capteur solaire (11) transférer au moins une partie de la seconde quantité de chaleur (Q2) au dispositif de réception de fluide chaud (40); et
alimenter au moins une partie de la première et seconde quantité de chaleur (Q1, Q2) à un dispositif consommateur (60) au moyen d'un fluide.

10. Procédé selon la revendication 9, dans lequel au moyen d'un entraînement rotatif fourni par le dispositif consommateur (60) pendant son fonctionnement, de l'énergie électrique est générée, qui est introduite dans un réseau électrique (80), et au moyen d'un entraînement rotatif fourni par la turbine à gaz (20) pendant son fonctionnement. de l'énergie électrique est générée, qui est introduite dans le réseau électrique (80).

11. Procédé selon la revendication 9 ou 10, dans lequel, si la première quantité de chaleur (Q1) est inférieure à la valeur limite, une partie de la deuxième quantité de chaleur (Q2) est alimentée dans le fluide s'écoulant à travers le passage de fluide de capteur solaire (11) de l'agencement de capteur solaire (10) de sorte qu'il soit maintenu à une température prédéterminée.

12. Procédé selon une quelconque des revendications 9 à 11, avec un moteur à gaz et/ou diesel (20) en plus ou à la place de la turbine à gaz (20).
